Europäisches Patentamt

European Patent Office

Office européen des brevets

(19)

(11) Numéro de publication: **0 131 855**
**B1**

(12) **FASCICULE DE BREVET EUROPEEN**

(45) Date de publication du fascicule du brevet: **22.08.90**

(21) Numéro de dépôt: **84107855.3**

(22) Date de dépôt: **05.07.84**

(51) Int. Cl.⁵: **D 03 D 11/00,** D 03 D 25/00,
D 03 D 1/00, B 60 C 9/00

(54) **Procédés pour réaliser une nappe protectrice ou une nappe de renfort d'enveloppes de pneumatiques, nappes obtenues, enveloppes comportant de telles nappes.**

(30) Priorité: **19.07.83 FR 8312041**

(43) Date de publication de la demande:
**23.01.85 Bulletin 85/04**

(45) Mention de la délivrance du brevet:
**22.08.90 Bulletin 90/34**

(84) Etats contractants désignés:
**AT BE CH DE GB IT LI LU NL SE**

(56) Documents cités:
**EP-A-0 056 351**
**EP-A-0 107 125**
**FR-A- 513 957**
**FR-A-1 526 185**
**FR-E- 95 308**
**GB-A- 19 412**
**GB-A-2 101 643**
**US-A-1 335 311**

(73) Titulaire: **MICHELIN & CIE (Compagnie Générale des Etablissements Michelin) Société dite:**
**4 rue du Terrail**
**F-63000 Clermont-Ferrand (FR)**

(72) Inventeur: **Gouttebessis, Jacques**
**Chanat la Mouteyre**
**F-63530 Volvic (FR)**
Inventeur: **Merle, Michel**
**219 rue de Blanzat**
**F-63100 Clermont-Ferrand (FR)**

(74) Mandataire: **Doussaint, Jean-Marie et al**
**MICHELIN & CIE Service K. Brevets**
**F-63040 Clermont-Ferrand Cedex (FR)**

Courier Press, Leamington Spa, England.

EP 0 131 855 B1

## Description

L'invention concerne les enveloppes de pneumatiques. L'invention concerne plus particulièrement les enveloppes de pneumatiques comportant une ou plusieurs armatures dites "armatures de renfort", destinés à rigidifier une ou plusieurs parties de ces enveloppes, ces armatures étant constituées chacune d'au moins une nappe dite "nappe de renfort" ou "nappe de travail". Lorsqu'une telle armature est utilisée dans le sommet des enveloppes de pneumatiques, elle est en général appelée "armature de sommet".

La demande de brevet européen No. 56 351 décrit un tissu tridimensionnel pour le renforcement de matériaux stratifiés;

La demande de brevet français No. 83-02 625 décrit une nappe de renfort pour enveloppe de pneumatique, cette nappe étant constituée au moins en partie par un tissu avec un corps tridimensionnel.

L'expérience montre qu'il est difficile d'abouter les extrémités d'une telle nappe de renfort en tissu tridimensionnel de façon à obtenir une nappe sans fin susceptile d'être imprégnée de caoutchoucs, et ceci pour les raisons suivantes.

Lorsque l'aboutement est effectué par simple juxtaposition des extrémités de la nappe on obtient une rigidité insuffisante au niveau de l'aboutement, ce qui produit un affaiblissement local de l'article obtenu après imprégnation.

Lorsque l'aboutement est obtenu par superposition des extrémités de la nappe, il se produit une surépaisseur locale importante ce qui provoque à cet endroit une hétérogénéité dans les caractéristiques et les performances de l'article obtenu après imprégnation.

La demanderesse a tenté de remédier à ces inconénients en enroulant sur plusiers épaisseurs une nappe de tissu bidimensionnel, de façon à obtenir une nappe sans fin d'épaisseur notable, pratiquement sans perte de rigidité locale ou sans surépaisseur locale. Cependent, cette technique donne une nappe sans fin dont la rigidité dans l'épaisseur peut être excessive pour la réalisation d'articles par imprégnation. De plus, cette technique d'enroulement est coûteuse à la fois en investissement de matériel et en main-d'oeuvre.

Le brevet GB—A—19412 (1909) décrit un procédé pour joindre les extrémités de nappes carcasse utilisées dans une enveloppe de pneumatique, de façon à avoir une épaisseur régulière dans la zone de jonction. Ce procédé consiste à réaliser, dans le tissu tridimensionnel des nappes, des portions discontinues constituées par deux couches de tissu, et à couper le tissu dans ces portions discontinues de façon à obtenir une nappe dont on aboute ensuite les extrémités. Le but de l'invention est de perfectionner ce procédé pour réaliser une nappe de renfort destinée à être utilisée dans une enveloppe de pneumatique.

Ce procédé conforme à l'invention est défini par la revendication principale 1.

L'invention concerne également les nappes de renfort obtenues selon ce procédé, qu'elles soient ou non imprégnées de matières, ainsi que les enveloppes de pneumatiques comportant chacune au moins une de ces nappes.

Les exemples de réalisation qui suivent ainsi que les figures toutes schématiques du dessin correspondant à ces exemples sont destinés à illustrer l'invention et à en faciliter la compréhension sans toutefois en limiter la portée.

Sur le dessin:

—la figure 1 représente en perspective une bande de tissu utilisée pour la réalisation d'une nappe sans fin, cette nappe étant destinée à être utilisée dans une enveloppe de pneumatique soit comme nappe protectrice, soit comme nappe de renfort;

—la figure 2 représente, vue de profil, la bande représentée à la figure 1, pendant l'opération de coupe;

—la figure 3 représente, en perspective, la nappe obtenue après l'opération de coupe;

—la figure 4 représente, vue de profil, une nappe sans fin obtenu avec la nappe représentée à la figure 3;

—la figure 5 représente, vue de profil, une portion d'une autre bande utilisée pour la réalisation de plusieurs nappes sans fin;

—la figure 6 représente en perspective une autre nappe obtenue après découpe et avant aboutement;

—la figure 7 représente en coupe radiale une enveloppe de pneumatique comportant une nappe sans fin à, cette nappe étant une nappe protectrice;

—la figure 8 représente en coupe une portion du tissu utilisé pour réaliser la nappe protectrice représentée à la figure 7;

—la figure 9 représente en coupe radiale une autre enveloppe de pneumatique comportant une nappe sans fin conforme à l'invention, cette nappe étant une armature de sommet, la coupe radiale traversant la partie de la nappe où a été réalisé l'aboutement;

—la figure 10 représente, vue de dessus, une portion d'un ruban utilisé pour réaliser la nappe sans fin représentée à la figure 9, conformément à l'invention, ce ruban comportant des zones de discontinuité;

—la figure 11 représente une coupe de la portion de ruban représentée à la figure 10, cette coupe étant effectuée, dans une zone de discontinuité, selon la droite XI—XI de la figure 10;

—la figure 12 représente une coupe de la portion de ruban représentée à la figure 10, cette coupe étant effectuée, hors des zones de discontinuité, selon la droite XII—XII de la figure 10;

—la figure 13 représente, vue de dessus, une portion d'une bande obtenue à partie du ruban représenté en partie à la figure 10, cette bande servant à réaliser une nappe;

—la figure 14 représente en perspective les deux extrémités d'aboutement de la nappe obtenue avec la bande représentée en partie à la figure 13, de façon à obtenir la nappe sans fin représentée à la figure 9.

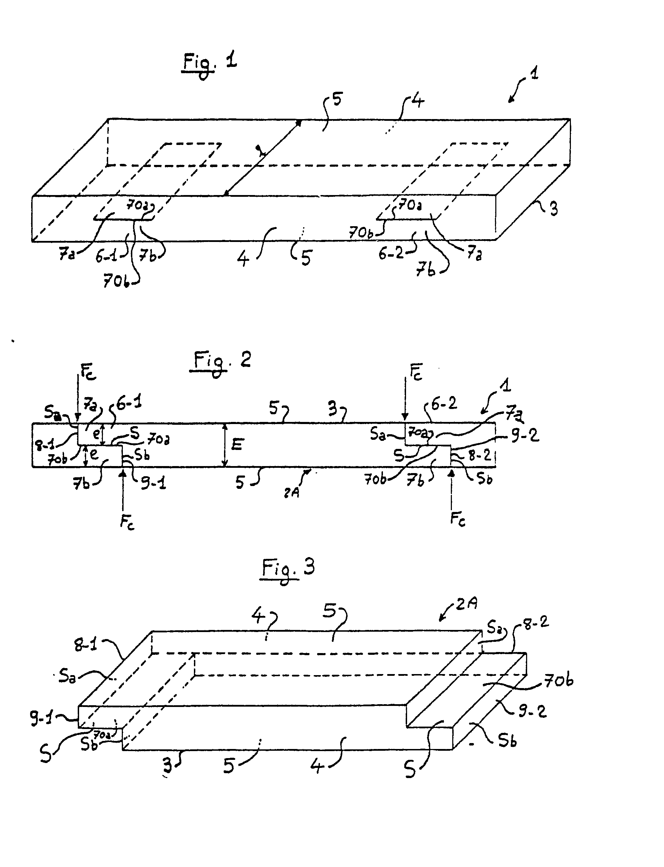

Les figures 1 à 8 représentent une réalisation conforme à l'état de la technique.

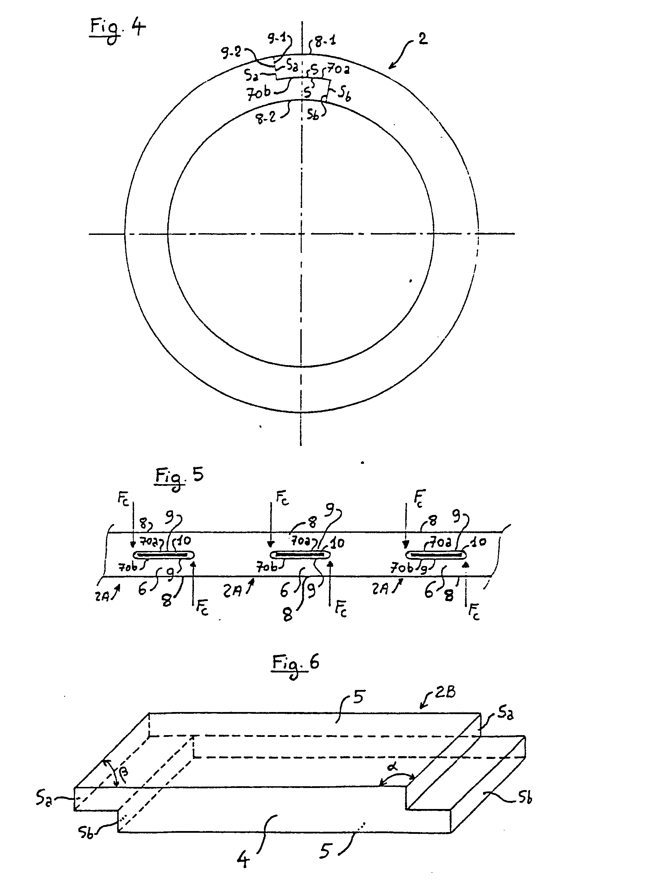

On voit à la figure 1 une bande 1 utilisée pour réaliser une nappe sans fin 2 qui est représentée à la figure 4. Cette bande 1 est réalisée avec un tissu 3. Ce tissu 3 est tridimensionnel, c'est-à-dire que les fils qui le constituent sont distribués dans les trois dimensions. Comme décrit plus loin, cette nappe 2 est destinée à être utilisée dans une enveloppe de pneumatique soit comme nappe protectrice, soit comme nappe de renfort.

Le terme "fil" doit être pris dans un sens très général, c'est-à-dire que chacun de ces fils peut être constitué par exemple soit d'un seul fil unitaire, soit d'un assemblage de plusieurs fils unitaires formant par exemple un câble, chaque fil unitaire pouvant être éventuellement constitué soit d'un filament unique, soit de plusieurs filaments. Chacun de ces fils peut aussi être constitué par exemple d'un assemblage de fibres, ou d'un ou plusieurs rubans.

D'autre part, les fils du tissu 3 peuvent être réalisés soit avec la même matière soit avec des matières différentes.

Ce tissu comporte deux faces latérales 4, deux faces principales 5, et deux portions discontinues 6-1 et 6-2. Chaque portion discontinue 6-1, 6-2 est constituée par deux couches de tissu 7a, 7b.

Pour chaque portion discontinue 6-1, 6-2, la face 70a de la couche 7a et la face 70b de la couche 7b sont en regard l'une de l'autre et forment chacune une "face de discontinuité". Ces faces 70a, 70b sont par exemple au contact l'une de l'autre, mais elles sont dépourvues de lien entre elles, c'est-à-dire qu'on peut les écarter l'une de l'autre. Chacune de ces faces de discontinuité 70a, 70b s'étend d'une face latérale 4 à l'autre et elle est obtenue de préférence directement lors du tissage. A titre d'exemple, la bande 1 est disposée de façon à avoir une forme générale plane, les faces 70a, 70b et les faces principales 5 sont parallèles entre elles et supposées planes et horizontales, les faces latérales 4 étant perpendiculaires à ces faces 5, 70a, 70b, les couches 7a, 7b étant dont superposées. Il va de soi que d'autres réalisations sont possibles.

La terme "face principale" employé dans un but de simplification ne veut pas dire que l'aire des faces principales 5 soit nécessairement supérieure à l'aire des faces latérales 4. On peut en effet envisager des cas de réalisations où l'aire des faces principales 5 est égale ou inférieure à l'aire des faces latérales 4, mais dans les cas les plus courants l'aire des faces principales 5 est supérieure à l'aire des faces laterales 4.

On coupe la bande 1 dans les deux portions dicontinues 6-1, 6-2 de façon à obtenir la nappe 2A avec deux extrémités 8-1, 8-2. Dans chaque portion discontinue 6-1, 6-2, la coupe est effectuée à travers toute l'épaisseur "e" et sur toute la largeur "1" de chaque couche 7a, 7b. Pour la clarté du dessin les couches 7a, 7b ont été représentées avec une épaisseur "e" de même valeur, et la largeur "1" de chaque couche 7a, 7b est égale à la largeur "1" supposée constante des faces principales 5, ces faces, de même aire, ayant une forme rectangulaire (figure 1, 2) mais il va de soi que d'autres réalisations sont possibles.

La coupe est effectuée dans chaque portion discontinue 6-1, 6-2 de façon à obtenir une des extrémités 8-1, 8-2 de la nappe 2A, cette extrémité comportant une "surface d'aboutement" 9-1 ou 9-2. Cette surface d'aboutement est constituée à la fois par la surface de coupe $S_a$, $S_b$, de chaque couche 7a, 7b et par une "surface de discontinuité" S, cette surface de discontinuité étant formée par une partie ou par la totalité d'au moins une face de discontinuité, cette surface d'aboutement joignant ainsi les deux faces principales 5 et les deux faces latérales 4 de la nappe 2A.

La figure 2 représente la façon dont la coupe est effectuée dans chaque portion discontinue 6-1, 6-2, cette coupe étant symbolisée par les flèches $F_c$. La figure 3 représente la nappe 2A ainsi obtenu lorsqu'elle a été séparée du reste de la bande 1, cette nappe étant disposée de façon à avoir une forme générale plane.

Pour chaque surface d'aboutement 9-1, 9-2, la surface de coupe $S_a$, $S_b$ traversant chaque couche 7a, 7b est supposée plane et perpendiculaire aux faces 4, 5 de la nappe 1, ces surfaces $S_a$, $S_b$ étant donc parallèles, et la surface de discontinuité S est supposée être constituée par toute une face 70a ou 70b. La surface S correspondant à l'extrémité 8-1 est constituée par toute la face 70a de la portion discontinue 6-1, et la surface S correspondant à l'extrémité 8-2 est constituée par toute la face 70b de la portion discontinue 6-2. Ce mode de réalisation n'est bien sûr pas limitatif. On peut en effet envisager des modes de réalisation où les surfaces $S_a$, $S_b$ ont une forme et une orientation quelconques, et où la surface S n'est constituée par exemple que par une partie d'une des faces 70a, 70b. Chaque surface d'aboutement 9-1, 9-2 joint ainsi les deux faces principales 5 et les deux faces latérales 4 de la nappe 2A, l'épaisseur E de cette nappe 2A étant pratiquement égale au double de l'épaisseur "e" (fig. 2, 3).

Etant donné que, dans chaque portion discontinue 6-1, 6-2, les faces en regard 70a, 70b des couches 7a, 7b sont simplement disposées l'une contre l'autre, sans liaison entre elles, il est facile de séparer la nappe 2A du reste de la bande 1 lorsque la coupe a été effectuée dans les portions discontinues 6-1, 6-2.

On aboute ensuite les deux extrémités 8-1, 8-2 de la nappe 2A, en mettant en contact la surface d'aboutement 9-1 de l'extrémité 8-1 avec la surface d'aboutement 9-2 de l'extrémité 8-2, ce contact étant effectué sur toutes les aires de ces surfaces. Les surfaces $S_a$ sont donc disposées l'une contre l'autre sur toute leur aire et il en est de même des surfaces $S_b$ entre elles et des surfaces S entre elles, la face 70a de l'extrémité 8-1 étant au contact de la face 70b de l'extrémité 8-2. Chacune des surfaces $S_a$, $S_b$, S d'une extrémité à pratiquement la même forme et la même aire que la surface correspondante $S_a$, $S_b$, S de l'autre extrémité contre laquelle elle est appliquée, c'est-à-dire que les surfaces d'aboutement 9-1, 9-2 ont pratiquement la même forme et la même aire.

De cette façon, après aboutement, la nappe sans fin 2 obtenue a une épaisseur pratiquement constante et égale à E sur toute son étendue.

Il en est de même de sa largeur "1", c'est-à-dire que l'aboutement s'effectue pratiquement sans introduction d'hétérogénéité dimensionnelle. Le contact peut être direct ou indirect par l'intermédiaire d'une fine couche de matériau de liaison.

On obtient ainsi la nappe sans fin 2 représentée à la figure 4. Cette nappe peut être par exemple imprégnée de matière élastomérique soit avant l'aboutement, soit après l'aboutement, cette matière servant par exemple pour lier les extrémités 8-1, 8-2 entre elles. Il va de soi que d'autres moyens peuvent être utilisés pour lier les extrémités 8-1, 8-2 entre elles, par exemple par couture ou par soudure de fils fondus si le tissu 3 comporte des fils fusibles, comme par exemple des fils en matière plastique.

Le procédé conforme à l'invention se prête particulièrement bien à une chaîne de fabrication en continu. On utilise par exemple dans ce cas un rouleau de bande 1 comportant une multitude de portions discontinues 6 (Figure 5). Cette bande 1 défile alors devant un ou plusieurs postes de coupe, la coupe effectuée sur deux portions discontinues 6 par exemple successives donnant ainsi une nappe 2A dont les extrémités 8 peuvent être aboutées automatiquement. Dans un but de simplification, ces postes de coupe ont été schématisés par les flèches Fc à la figure 5.

Lorsque la bande 1 est imprégnée d'une matière avant l'opération de coupe, il peut être avantageux de disposer avant cette imprégnation une feuille 10 non imprégnable et non collante entre les faces 70a, 70b en regard de certaines de ces portions, ou de toutes ces portions comme représenté à la figure 5.

Ces feuilles 10 qui peuvent être disposées dans le tissu 3 soit lors de l'opération de tissage, soit après cette opération, permettant d'éviter le collage entre les faces en regard 70a, 70b lors de l'imprégnation et elles peuvent être enlevées facilement après l'opération de coupe, lorsque les surfaces d'aboutement 9 ont été obtenues, puisque ces feuilles 10 ne collent pas à la matière d'imprégnation utilisée. Ces feuilles peuvent être réalisées par exemple en polymère siliconé ou fluoré. Ces feuilles peuvent être réutilisées pour diminuer les coûts.

Lorsque l'opération d'imprégnation est effectuée par calandrage, il peut être avantageux d'imprégner le tissu 3 avant la coupe, car le passage du ruban 1, avec les feuilles 10, dans des rouleaux de calandrage est plus facile à réaliser que sur des nappes 2A coupées.

Les surfaces de coupe $S_a$, $S_b$ ont été représentées perpendiculaires aux faces latérales 4, mais il va de soi qu'on peut envisager des réalisations de l'invention où tel n'est pas le cas.

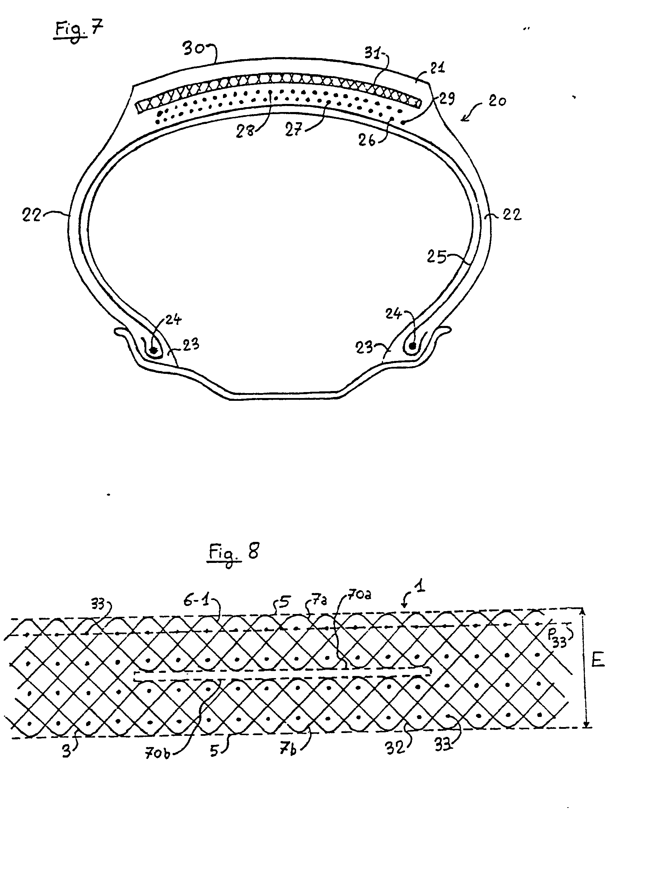

La figure 6 représente par exemple une nappe 2B analogue à la nappe 2A mais avec la différence que les surfaces de coupe $S_a$, $S_b$ font des angles α, β avec une même face latérale 4. Ces angles α, β

sont différents de 90° et supplémentaires, c'est-à-dire que α+β=180°C. Dans les exemples qui précèdent, les surfaces de coupe $S_a$, $S_b$ sont situées dans des plans perpendiculaires aux faces principales 5 supposées planes et parallèles, mais on peut envisager des cas où ces surfaces de coupe sont situées dans des plans non perpendiculaires aux faces principales 5. Les surfaces $S_a$, $S_b$ peuvent même comporter plusieurs portions de plans ou avoir au moins en partie une forme courbe. Il va de soi que la couple d'angles α, β correspondant à la surface de coupe $S_a$ peut être différent du couple d'angles α, β correspondant à la surface de coupe $S_b$.

Dans les exemples précédemment décrits, les portions discontinues ne comportent chacune que deux couches de tissu. Il va de soi que l'invention s'applique aux cas où les portions discontinues comportent chacune plus de deux couches et au cas où les couches ont des épaisseurs différentes.

On voit à la figure 7 une enveloppe de pneumatique 20 comportant une nappe protectrice. Cette enveloppe vulcanisée, c'est-à-dire prête à rouler, comporte un sommet 21, deux flancs 22, deux bourrelets 23, chaque bourrelet étant par exemple renforcé avec une tringle 24. Une nappe carcasse radiale 25 s'étend d'un bourrelet 23 à l'autre en entourant les tringles 24 de façon connue en soi. Le sommet 21 comporte une armature de renfort 26 constituée par exemple de façon connue de deux nappes 27, 28 superposées dites "nappes de travail" chacune de ces nappes comportant des fils ou assemblages de fils, par exemple des câbles métalliques 29, ces câbles 29 étant parallèles entre eux dans chaque nappe, les câbles 29 d'une nappe étant croisés avec les câbles 29 de l'autre nappe. Au-dessus de l'armature de renfort 26, c-est-à-dire entre cette armature et la surface de roulement 30, se trouve une nappe protectrice 31 constituée au moins en partie d'un tissu tridimensionnel, conformément à la demande de brevet français 82-17 963 citée précédemment. Cette nappe protectrice est par exemple constituée de la nappe sans fin 2 précédemment décrite et imprégnée de gomme aant son incorporation dans l'enveloppe 20, l'aboutement ayant été réalisé conformément au procédé précédemment décrit et représenté aux figures 1 à 4, avec les extrémités d'aboutement 8-1, 8-2, les surfaces de coupe $S_a$, $S_b$ ayant une orientation par exemple radiale lorsque la nappe est incorporée dans l'enveloppe 20.

La figure 8 représente en coupe une portion de la bande 1 utilisée pour la réalisation de la nappe 31, la coupe étant effectuée selon un plan parallèle aux faces latérales 4 dans la portion discontinue 6-1 et aux environs de cette portion discontinue. Le tissue tridimensionnel 3 remplit tout l'espace entre les faces principales 5, sauf dans la portion discontinue 6-1 où le tissage a été effectué de façon à constituer les deux couches 7a, 7b. La portion de bande 1 représentée à la figure 8 est disposée de façon à avoir une forme générale plane avec des faces principales 5 planes et parallèles.

Le tissue 3 comporte des fils de chaîne 32 et des fils de trame 33, ces fils de trame étant représentés par des points pour simplifier le dessin. Dans le tissu 3, chaque fil de chaîne 32 ondule pratiquement dans un plan perpendiculaire aux faces principales 5 et parallèle aux faces latérales 4, en étant alternativement tangent à l'une des faces principales 5 puis à l'autre, l'ondulation s'effectuant dont sur toute l'épaisseur E du tissu, sauf dans la portion discontinue 6-1 où chacun de ces fils de chaîne 32 est alternativement tangent à l'une des faces principales 5 puis à la face 70a ou 70b de la couche 7a ou 7b dans laquelle il se trouve. Les faces 5, 70a, 70b sont représentées sous forme de droites pointillées à la figure 8.

Les fils de trame 33 sont disposés entre les fils de chaîne 32 pratiquement sur plusieurs plans dans l'épaisseur E de la bande 1. Un de ces plans $P_{33}$ dit "plan de trame" est représenté sous forme d'une droite pointillée à la Figure 8. Les plans de trame $P_{33}$ sont notamment parallèles entre eux et aux faces principales 5, le tissu 3 comportant par exemple au total quatre plans de trame $P_{33}$ dans toute son épaisseur, soit deux plans de trame $P_{33}$ dans chaque couche 7a, 7b, et les fils de trame 33 ondulent dans chacun de ces plans, chacun de ces fils de trame ayant une orientation moyenne perpendiculaire aux faces latérales 4. Toutes les caractéristiques de réalisation décrites dans la demande de brevet français 82-17 963 citée précédemment peuvent s'appliquer à la réalisation de la nappe protectrice 31, ces caractéristiques étant par exemple les suivantes:

—dans chaque plan de trame $P_{33}$, les ondulations des fils de trame 33 sont en phase;

—les fils 32, 33 sont réalisés avec une ou plusierus matières dont la contrainte à la rupture est inférieure à 140 kg/mm²;

—la porosité du tissu 3 varie de 60 à 90%;

—la gomme imprégnant le tissu 3 a une dureté Shore A qui varie de 40 à 70 après vulcanisation et, de préférence, de 50 à 60;

—au voisinage du plan équatorial de l'enveloppe, les fils de chaîne sont ondulés dans des plans pratiquement parallèles au plan équatorial et les fils de trame sont pratiquement ondulés dans des cylindres dont l'axe de révolution est l'axe de révolution du pneumatique.

Le nappe protectrice 31 à tissu tridimensionnel permet de diminuer très notablement les avaries de l'armature de renfort 26 lorsque ces avaries sont dues aux chocs, ainsi que les risques de corrosion dûs à la migration de l'eau dans les fissures de la gomme et le long des câbles 29 touchés ou cassés lors des chocs.

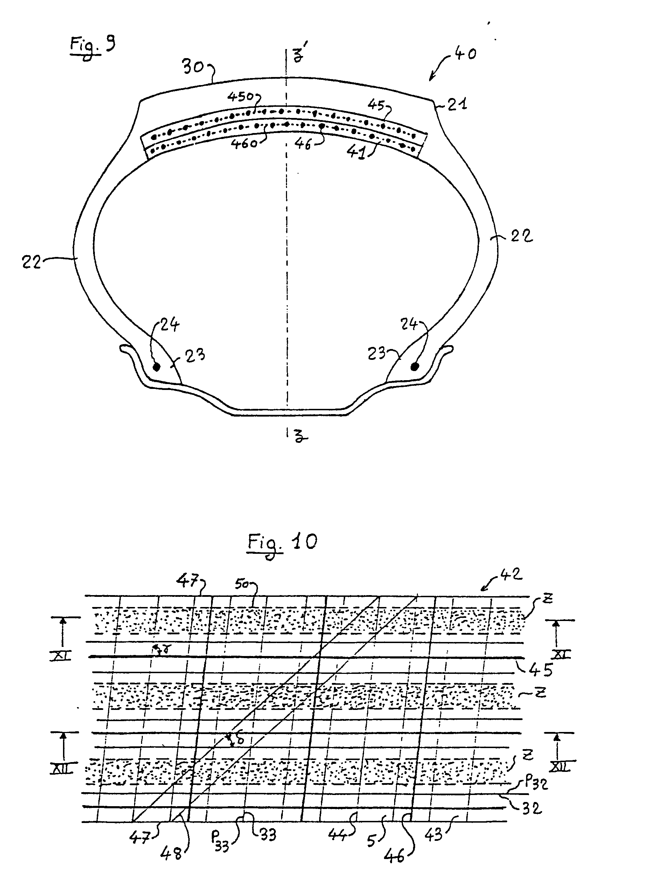

On voit à la figure 9 un autre exemple d'enveloppe de pneumatique 40 comportant une nappe de renfort conforme à l'invention. Sur cette figure, les indices 21, 22, 23, 24, 30 ont la même signification que sur la figure 7 pour l'enveloppe 20 précédemment décrite. L'enveloppe 40, par exemple dépourvue de carcasse, comporte une armature de sommet 41 constituée d'une nappe de renfort conforme à la demande de brevet français 83-02 625 précédemment mentionnée.

La nappe de renfort 41 est réalisée à partir d'un ruban 42 de tissu 43 (fig. 10 à 14). Le tissu 43 comporte un corps tridimensionnel 44 avec des fils de chaîne 32 et des fils de trame 33. Les fils de chaîne 32 ondulent pratiquement dans des plans $P_{32}$ dits "plans de chaîne" parallèles entre eux et perpendiculaires aux face principales 5, parallèles entre elles, de ce ruban 42, et les fils de trame 33 sont disposés pratiquement dans des plans de trame $P_{33}$ parallèles entre eux et à ces faces principales 5, ces fils de trame 33 étant par exemple rectilignes et parallèles entre eux. Le tissu 43 comporte de préférence au moins quatre plans de trame $P_{33}$, par exemple six dans l'exemple étudié, les fils de trame 33 étant dont parallèles aux faces principales 5.

La structure du corps 44 est donc analogue à celle du tissu 3 précédemment décrit pour la nappe protectrice 31 mais avec la différence que les fils de trame 33 du corps 44 sont rectilignes et font avec les plans de chaîne $P_{32}$ un angle γ différent de 90°, cet angle γ étant un angle aigu (figure 10).

Le tissu 43 comporte en outre deux catégories de fils de renfort 45, 46 disposés dans le corps 44 et maintenus par ce corps. Les fils de renfort 45, par exemple rectilignes sont parallèles entre eux et aux plans de chaîne $P_{32}$ et pratiquement disposés dans un plan $P_{45}$. Les fils de renfort 46, par exemple rectilignes, sont parallèles entre eux et aux fils de trame 33, tout en étant disposées pratiquement dans un plan $P_{46}$. Les plans $P_{45}$, $P_{46}$ sont parallèles entre eux et aux faces principales 5. Dans chaque plan $P_{45}$, $P_{46}$, et d'un de ces plans à l'autre, les fils de renfort 45, 46 sont séparés les uns des autres par des fils 32, 33 du corps 44, de telle sorte que les fils de renfort sont dépourvus de contact entre eux. Le plan $P_{46}$ est par exemple confondu avec un plan de trame $P_{33}$.

La structure du corps 44 est tridimensionnelle puisque les fils 32, 33 qui le constituent sont distribués dans les trois dimensions. Ce corps 44 sert en quelque sorte d'échauffaudage pour les fils de renfort 45, 46 et il est susceptible de garder une structure tridimensionnelle même si on enlève les fils de renfort 45, 46 du tissu 43.

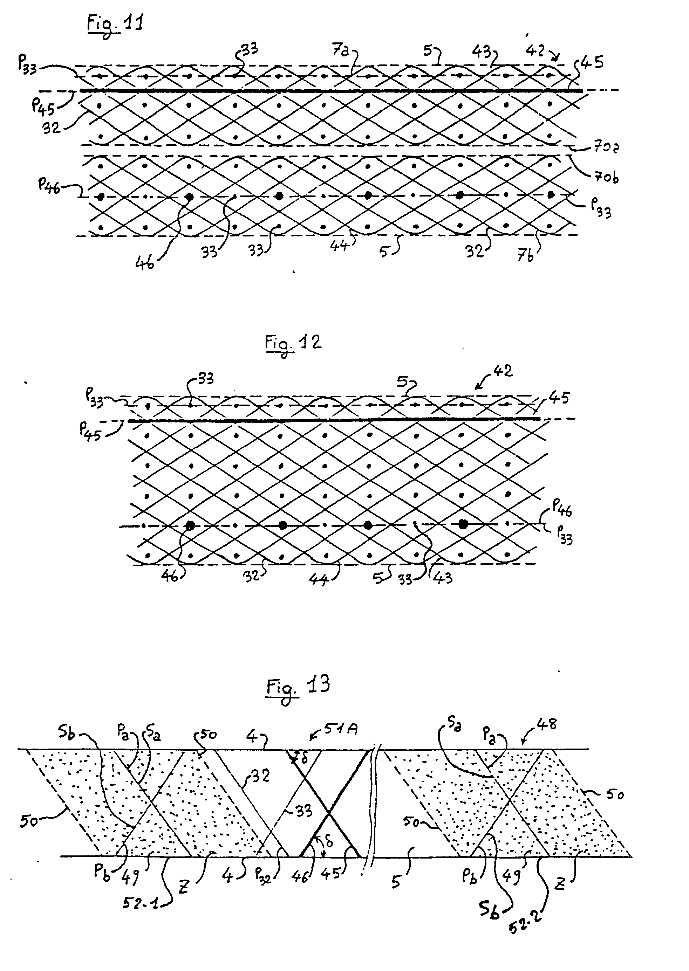

Le tissu 43 comporte des zones de discontinuité Z qui s'étendent sur toute la longueur de ce tissu, parallèlement aux plans de chaîne $P_{32}$ et aux bords 47 de ce tissu. Ces zones, représentées en grisé, étant limitées par des droites pointillées 50 à la figure 10. La figure 11 représente une portion de coupe du tissu 43, cette coupe étant effectuée dans une de ces zones Z et selon un plan de chaîne $P_{32}$, symbolisé par la droite XI—XI à la figure 10. On voit sur cette figure 11 que les fils de chaîne 32 se répartissent en deux couches 7a, 7b, ces couches étant séparées l'une de l'autre, c'est-à-dire qu'elles ne sont réunies par aucun fil. Chaque fil de chaîne 32 ondule dans une de ces couches entre une face principale 5 et la face de discontinuité 70a ou 70b correspondant à cette couche. Chacune de ces couches 7a, 7b comporte un seul des plans $P_{45}$, $P_{46}$, la couche 7a compor-

tant par exemple les fils de renfort 45 et la couche 7b comportant les fils de renfort 46. Chacune de cess couches comporte par exemple trois plans de trame $P_{33}$.

La figure 12 représente une portion de coupe du tissu 43, cette coupe étant effectuée hors des zones de discontinuité Z, selon un plan de chaîne $P_{32}$ symbolisé par la droite XII—XII a la figure 10. On voit sur cette figure 12 que chaque fil de chaîne 32 ondule d'une face principale 5 à l'autre face principale 5.

Pour la clarté du dessin, le nombre de fils 32, 33, 45, 46 a été considérablement réduit aux figures 10, 11, 12, les fils de trame 33 de même que les fils de renfort 46 ont été représentés par des points aux figures 11 et 12, et les plans $P_{33}$, $P_{45}$, $P_{46}$ ont été représentés par des droites pointillées aux figures 11 et 12.

On découpe dans le tissu 43 des bandes 48, la découpe de chaune de ces bandes étant effectuée selon des plans parallèles entre eux, qui font l'angle aigu δ avec les plans de chaîne $P_{32}$, les angles δ, γ étant liés par exemple par la relation δ=γ/2 (fig. 10), ces plans de découpe étant perpendiculaires aux faces principales 5. Une telle bande 48 est représentée à la figure 13, après séparation du reste du tissu 43. Le ruban 42 et la bande 48 représentés en partie aux figures 10 à 13 sont disposés de façon à avoir une forme générale plane avec des faces principales 5 planes et parallèles.

Dans la bande 48 représentée en partie à la figure 13, la direction des fils de renfort 45 est croisée avec la direction des fils de renfort 46. Chacun de ces fils de renfort 45, 46 fait l'angle aigu δ avec les faces latérales 4 de la bande 48. Pour la clarté du dessin, seul un fil 45 et un fil 46 onte été représentés à la figure 13, avec un seul fil de chaîne 32 et un seul fil de trame 33. Cette bande 48 comporte, d'autre part, des portions discontinues 49 constituées par les portions de zones de discontinuitié Z situées entre les plans de découpe qui ont permis de réaliser la bande 48. Les faces extrêmes 50 limitant chaque portion discontinue 49 sont parallèles aux plans de chaîne $P_{32}$ et représentées par des segments de droites pointillés à la figure 13.

On coupe ensuite la bande 48 dans deux portions discontinues 49. Dans chaune de ces portions discontinues, la coupe est effectuée selon deux plans croisés: un plan $P_a$ parallèle aux plans de chaîne $P_{32}$ dans la couche 7a, c'est-à-dire un plan parallèle aux fils de renfort 45 de cette couche 7a, et un plan $P_b$ parallèle aux fils de renfort 46 dans la couche 7b, ces plans $P_a$, $P_b$ étant par exemple perpendiculaires aux faces principales 5 de la bande 48. La coupe selon chaque plan $P_a$, $P_b$ est effectuée de façon à ne pas toucher les fils de renfort 45, 46, par exemple pratiquement à égale distance de deux fils de renfort successifs d'une même couche $P_{45}$, $P_{46}$.

La surface de coupe $S_a$ correspond donc au plan de coupe $P_a$, et la surface de coupe $S_b$ correspond donc au plan de coupe $P_b$.

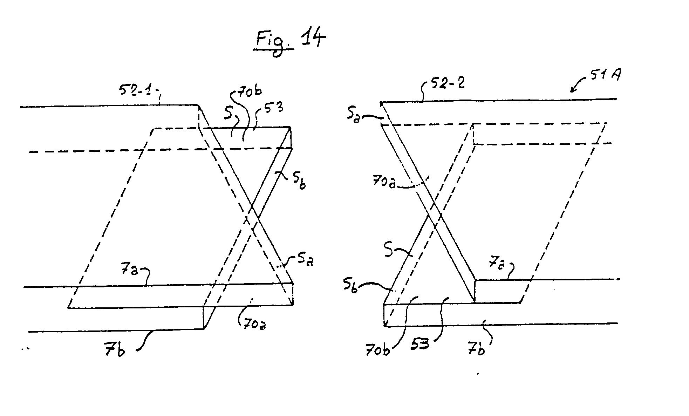

On obtient ainsi une nappe 51A avec deux extrémités 52-1, 52-2. La figure 14 représente les deux extrémités 52-1, 52-2 lors de leur aboutement. Chacune de ces extrémités comporte une surface d'aboutement 53 qui comporte les deux surfaces de coupe $S_a$, $S_b$ et une surface de discontinuité S constituée par une partie de la face 70a et une partie de la face 70b L'aboutement des extrémités 52-1, 52-2 est effectué en mettant en contact la surface d'aboutement 53 d'une de ces extrémités avec la surface d'aboutement 53 de l'autre extrémité, de telle sorte que les surfaces $S_a$ soient disposées l'une contre l'autre sur toute leur aire et il en est de même des surfaces $S_b$ entre elles et des surfaces S entre elles. Chacune des surfaces $S_a$, $S_b$, S d'une extrémité a la même forme et la même aire que la surface correspondante $S_a$, $S_b$, S de l'autre extrémité contre laquelle elle est appliquée, de telle sorte qu'après aboutement la nappe sans fin obtenue a une épaisseur E pratiquement constante sur toute son étendue. Il en est de même de sa largeur "1", c'est-à-dire que l'aboutement s'effectue pratiquement sans introduction d'hétérogénéité dimensionnelle. Cette nappe sans fin donne l'armature de sommet 41 lorsqu'elle est incorporée dans l'enveloppe 40.

Les descriptions précédentes s'appliquent lorsque les fils de trame 33 sont ondulés, l'orientation de chacun de ces fils de trame correspondant alors à son orientation moyenne.

Les descriptions précédentes s'appliquent aussi lorsque les fils de renfort 45, 46 remplacent des fils de chaîne et/ou des fils de trame du corps 44 en étant éventuellement ondulés, l'orientation de chacun de ces fils, lorsqu'il est ondulé, correspondant alors à son orientation moyenne. C'est ainsi par exemple que les fils de renfort 46 remplacent des fils de trame 33 aux figures 11 et 12.

Cette méthode d'aboutement permet de conserver une distance pratiquement constante entre les fils de renfort 45, dans le plan P45, et entre les fils de renfort 46, dans le plan P46. L'aboutement est par exemple effectué après avoir imprégné le tissu 43 d'une gomme, soit avant découpe de la bande 48, soit après. Le tissu 43 pourrait comporter plus de deux plans de fils de renfort, ces fils étant croisés d'un plan à l'autre, en coupant par exemple chaque portion discontinue selon plus de deux plans croisés, chaque couche des portions discontinues comportant au moins un plan de fils de renfort.

La nappe sans fin ainsi obtenue donne l'armature de sommet 41 dont les fils de renfort 45, 46 sont répartis sur deux surfaces 450 et 460 représentées en pointillés à la figure 9, la surface 450 des fils de renfort 45 étant par exemple située au-dessus de la surface 460 des fils de renfort 46. Chacune de ces surfaces, au voisinage du plan équatorial de l'enveloppe, est pratiquement un cylindre de révolution dont l'axe est l'axe de révolution de l'enveloppe (non représenté sur le dessin), le plan équatorial, schématisé par la ligne zz' à la figure 9, étant le plan perpendiculaire à cet axe et passant par le milieu de la surface de roulement 30, les fils de renfort 45, 46 de chaque surface 450, 460 étant, au voisinage du plan équatorial zz', parallèles entre eux et croisés avec les fils de renfort 46, 45 de l'autre surface. Dans l'enveloppe 40, au voisinage du plan équatorial zz', les fils de trame 33 sont pratiquement disposés sur plusieurs cylindres dont l'axe de révolution est l'axe de révolution de l'enveloppe. L'armature de sommet 41 dans l'enveloppe 40 terminée, c'est-à-dire prête à l'emploi, est donc un tissu tridimensionnel.

L'envelope 40 est réalisée par exemple par coulée de matières fluides ou pâteuses susceptibles de donner par réaction un polyuréthane, la coulée se faisant dans un moule après avoir disposé l'armature 41 directement sur le noyau du moule. L'armature 41 présente en particulier les avantages suivants: disposition facile dans le moule avec positionnement exact dans les trois dimensions des fils de renfort 45, 46 à l'interieur de l'enveloppe 40, qualité de fabrication très régulière, absence pratiquement complète d'hétérogénéité dans l'enveloppe, bon collage entre l'armature 41 et la matière avec laquelle elle est en contact, réalisation facile par tissage, les fils de renfort 45, 46 pouvant être avantageusement incorporés dans le tissu 43 lors de la même opération de tissage que les fils 32, 33 du corps 44, légèreté, en prenant pour tous les fils du tissu 43 des polymères organiques qui présentent en outre l'avantage de limiter les risques de corrosion.

Toutes les caractéristiques de réalisation décrites dans la demane française 83-02 625 citée précédemment peuvent s'appliquer à la réalisation de l'armature 41, ces caractéristiques étant par exemple les suivantes:

—les fils 32, 33, 45, 46 peuvent être réalisés avec des matières différentes, les fils de renfort 45, 46 étant par exemple réalisés en polyamide aromatique et les fils 32, 33 constituant le corps tridimensionnel 44, étant réalisés par exemple en polyester thermoplastique;

—les fils 32, 33 constituant le corps tridimensionnel 44 ont chacun une section droite dont la surface a une aire plus faible que celle de la surface de la section droite de chacun des fils de renfort, le rapport de ces aires étant notamment au plus égal à 1/4;

—la perméabilité du tissu 43 est au moins égale à $10^{-11}$ m² · Pa⁻¹ · s⁻¹ pour un fluide en écoulement laminaire dont la viscositié est de 1 Pa · s et la masse volumique de 1000 kg/m³;

—la porosité du tissu 43 est au moins égale à 50%;

—le rapport entre, d'une part, la rigidité du tissu 43 mesurée selon chaque orientation des fils de renfort 45, 46, et, d'autre part, la rigidité du corps 44 seul mesurée selon cette orientation, est au moins égal à 10, ces mesures de rigidité étant effectuées pour un allongement relatif de 2%, le tissu 43 étant, pour cette mesure, dépourvu de fils de renfort 45, 46 d'orientation autre que celle selon laquelle la rigidité est mesurée;

—les fils de renfort 45, 46 ondulent légèrement, le taux d'ondulation de ces fils étant inférieure à 10%, cette ondulation étant particulièrement avantageuse lorsque ces fils sont monofilamentaires.

Il va de soi que l'armature 41 pourrait être réalisée par superposition de plusieurs nappes sans fins comportant chacune au moins deux plans de fils de renfort parallèles aux plans de trame, les fils de renfort pouvant faire avec le plan équatorial de l'enveloppe de pneumatique des angles quelconques et chacune de ces nappes étant réalisée par aboutement, conformément à l'invention, en évitant de préférence dans l'enveloppe la superposiion des extrémités aboutées de ces nappes.

En résumé, le procédé conforme à l'invention, pour la réalisation d'une nappe de renfort pour enveloppe de pneumatique, présente les avantages suivants;

—on évite toute surépaisseur au niveau de l'aboutement;

—on minimise les discontinuitiés mécaniques, le meilleur compromis entre la tenue de l'aboutement et la faible discontinuité mécanique étant obtenue lorsque l'aire de la surface de discontinuité S de chaque extrémité de la nappe est comprise entre 0,5% et 15% de l'aire d'une face principale 5 ou de chaque face principale 5 de la nappe;

—l'absence de surépaisseur et la diminution des discontinuités mécaniques permet d'avoir une qualité de fabrication satisfaisante et régulière;

—le procédé conforme à l'invention est facilement mécanisable.

L'invention s'applique aux cas où le tissu est coupé, en plus, parallèlement aux faces latérales 4, soit avant, soit après l'aboutement, pour obtenir par exemple plusieurs nappes sans fin dans largeur "1".

Bien entendu, l'invention n'est pas limitée aux exemples de réalisation précédemment décrits.

## Revendications

1. Procédé pour réaliser une nappe de renfort (41) destinée à être utilisée dans le sommet d'une enveloppe de pneumatique (40), ce procédé comportant les points suivants:

a) on utilise une bande (48) en tissue tridimensionnel (43), cette bande comportant deux faces latérales (4), deux faces principales (5), et au moins deux portions discontinues (49);

b) chaque portion discontinue est constituée par au moins deux couches de tissu (7a, 7b), les faces en regard de ces couches, dites "faces de discontinuité" (70a, 70b), s'étendant d'une face latérale à l'autre;

c) on coupe la bande dans ces deux portions discontinues (49), de façon à obtenir une nappe (51A) avec deux extrémités (52-1, 52-2);

d) dans chaque portion discontinue (49), la coupe est effectuée à travers toute l'épaisseur et sur toute la largeur de chaque couche de tissu, de façon à obtenir une des extrémités de la nappe, cette extrémité comportant une "surface d'aboutement" (53) constituée à la fois par la surface de coupe (5ab, 5b) de chaque couche, et par une "surface de discontinuité", cette surface de discontinuité étant formée par une partie ou par la totalité d'au moins une face de discontinuité, cette surface d'aboutement joignant ainsi les deux faces principales et les deux faces latérales de la nappe;

e) on aboute les deux extrémités de la nappe en mettant en contact la surface d'aboutement d'une extrémité avec la surface d'aboutement de l'autre extrémité, sur toutes leurs aires, la surface d'aboutement d'une extrémité ayant alors pratiquement la même forme et la même aire que la surface d'aboutement de l'autre extrémité;

ce procédé étant caractérisé par les points suivants:

f) le tissu (43) comporte un corps tridimensionnel (44) et des fils de renfort (45, 46) disposés dans ce corps et maintenus par ce corps, pratiquement tous les vides du tissu étant susceptibles d'être imprégnés d'au moins une matière entrant dans la constitution de l'enveloppe;

g) dans ces deux portions discontinues (49), la coupe est effectuée entre les fils de renfort (45, 46);

h) dans chaque portion discontinue, la coupe est effectuée selon des plans croisés ($P_a$, $P_b$), chaque plan traversant une couche, la bande étant disposée de façon à avoir une forme générale plane;

i) le corps comporte des fils de trame (33) et des fils de chaîne (32), les fils de trame étant disposés entre les fils de chaîne pratiquement sur plusieurs plans dits plans de trame ($P_{33}$) parallèles dans l'épaisseur de la bande;

j) les fils de renfort (45, 46) sont pratiquement disposés sur au moins deux plans ($P_{45}$, $P_{46}$) dans l'épaisser de la bande, chaque couche des portions discontinues comportant au moins un plan de fils de renfort, les fils de renfort ayant, dans chaque plan, la même orientation, chaque plan des fils de renfort étant parallèle aux plans des fils de trame, on confondu avec un de ces plans.

2. Procédé selon la revendication 1 caractérisé en ce que les faces de discontinuité (70a, 70b), sont obtenues lors de la réalisation du tissu (43), ces faces étant planes et parallèles aux faces principales de la bande, la bande étant disposée de façon à avoir une forme générale plane, avec des faces principales planes et parallèles.

3. Procédé selon l'une quelconque des revendications 1 ou 2 caractérisé en ce que, dans chaque portion discontinue (49), la coupe est effectuée selon des plans ($P_a$, $P_b$) perpendiculaires aux faces principales (5) de la bande (48), cette bande étant disposée de façon à avoir une forme générale plane avec deux faces principales planes et parallèles.

4. Procédé selon l'une quelconque des revendications 1 à 3 caractérisé en ce que le tissu (43) comporte des fils de chaîne (32) ondulant pratiquement dans un plan ($P_{32}$) perpendiculaire aux faces principales du tissu, lorsque la bande est disposé de façon à avoir une forme générale plane avec deux faces principales planes et parallèles, l'ondulation des fils de chaîne s'effectuant dans une partie seulement de l'épaisseur de la bande dans les portions discontinues, les fils de chaîne étant ainsi tangents aux faces de discontinuité, l'ondulation des fils de chaîne s'effectuant sur toute l'épaisseur de la bande en-dehors des portions discontinues, chaque fil de chaîne étant ainsi alternativement tangent à une des faces principales puis à l'autre en-dehors des portions discontinues.

5. Procédé selon l'une quelconque des revendications 1 à 4 caractérisé en ce qu'on imprègne le tissue (43) avec une matière.

6. Procédé selon la revendication 5 caractérisé en ce que cette imprégnation est opérée sur la bande (48), avant d'effectuer la coupe dans les portions discontinues, une feuille (10) non imprégnable et non collante se trouvant disposée entre les faces de discontinuité lors de cette imprégnation.

7. Procédé selon l'une quelconque des revendications 1 à 6 caractérisé en ce que l'aire de la surface de discontinuité de chaque extrémité de la nappe est comprise entre 0,5% et 15% de l'aire d'une face principale (5) ou de chaque face principale (5) de la nappe.

8. Procédé selon l'une quelconque des revendications 1 à 7 caractérisé en ce que les plans de trame ($P_{33}$) sont parallèles aux faces principales de la bande lorsque la bande est disposée de façon à avoir une forme générale plane avec deux faces principales planes et parallèles.

9. Procédé selon la revendication 8 caractérisé en ce que les fils de trame (33) sont disposés sur au moins quatre plans ($P_{33}$) dans l'épaisseur de la bande.

10. Procédé pour réaliser une nappe de renfort (41) selon l'une quelconque des revendications 1 à 9 caractérisé en ce que les fils de chaîne (32) du corps (44) ondulent chacun pratiquement dans un plan dit "plan de chaîne" ($P_{32}$) perpendiculaire aux faces principales (5) de la bande, les fils de trame (33) du corps (44) sont pratiquement parallèles aux faces principales (5) de la bande (48) et font avec les plans de chaîne ($P_{32}$) un angle différent de 90°, les fils de renfort (45, 46) d'au moins un plan étant parallèles aux plans de chaîne, et les fils de renfort d'au moins un plan étant parallèles aux fils de trame, la coupe, dans chaque portion discontinue étant effectuée selon des plans parallèles aux fils de renfort situés à l'endroit où cette coupe est effectuée.

11. Procédé pour réaliser une nappe de renfort selon la revendication 10 caractérisé en ce que la bande (48) est obtenue en coupant un ruban (42) de tissu selon des plans parallèles entre eux faisant avec les plans de chaîne de ce tissu un angle aigu δ égal à γ/2, γ étant l'angle que font les fils de trame (33) de ce tissu aves les plans de chaîne ($P_{32}$) de ce tissu.

12. Procédé pour réaliser une nappe de renfort (41) selon l'une quelconque des revendications 1 à 11, caractérisé en ce que les fils de renfort (45, 46) sont séparés les unes des autre par des fils du corps de telle sorte que les fils de renfort soient dépourvus de contact entre eux.

13. Procédé pour réaliser une nappe de renfort (41) selon l'une quelconque des revendications 1 à 12 caractérisé en ce que les fils de renfort (45, 46) remplacement des fils de chaîne (32) et/ou des fils de trame (33) du corps.

14. Procédé pour réaliser une nappe de renfort (41) selon l'une quelconque des revendications 1 à 13 caractérisé en ce que les fils de renfort (45, 46) sont réalisés avec au moins une matière différente de celle(s) utilisée(s) pour réaliser les fils du corps.

15. Procédé pour réaliser une nappe de renfort (41) selon l'une quelconque des revendications 1 à 14 caractérisé en ce que les fils (37, 33) constituant le corps (44) ont chacun une section droite dont la surface a une aire plus faible que celle de la surface de la section droite de chacun des fils de renfort.

16. Procédé pour réaliser une nappe de renfort (41) selon la revendication 15 caractérisé en ce que les fils (32, 33) constituant le corps (44) ont chacun une section droite dont la surface a une aire au plus égale au quart de celle de la surface de la section droite de chacun des fils de renfort.

17. Procédé pour réaliser une nappe de renfort (41) selon l'une quelconque des revendications 1 à 16 caractérisé en ce que la perméabilité du tissue (43) est au moins égale à $10^{-11}$ $m^2 \cdot Pa^{-1} \cdot s^{-1}$ pour un fluide en écoulement laminaire dont la viscosité est de $1$ $Pa \cdot s$ et la masse volumique de $1000$ $kg/m^3$.

18. Procédé pour réaliser une nappe de renfort (41) selon l'une quelconque des revendications 1 à 17 caractérisé en ce que la porosité du tissu (43) est au moins égale à 50%.

19. Procédé pour réaliser une nappe de renfort (41) selon l'une quelconque des revendications 1 à 18 caractérisé en ce que le rapport entre, d'une part, la rigidité du tissue (43) mesurée selon chaque orientation des fils de renfort (45, 46) et, d'autre part, la rigidité du corps (44) seul mesurée selon cette or orientation, est au moins égal à 10, ces mesures de rigidité étant effectuées pour un allongement relatif de 2%, le tissu (43) étant, pour cette mesure, dépourvu de fils de renfort (45, 46) d'orientation autre que celle selon laquelle la rigidité est mesurée.

20. Procédé pour réaliser une nappe de renfort (41) selon l'une quelconque des revendications 1 à 19 caractérisé en ce que les fils de renfort (45, 46) ondulent légèrement, le taux d'ondulation de ces fils étant inférieure à 10%.

**Patentansprüche**

1. Herstellungsverfahren für eine Verstärkungslage (41), die dazu bestimmt ist, im Scheitel einer Luftreifenhülle (4) verwendet zu werden, wobei das Verfahren die folgenden Punkte umfaßt:

a) man verwendet ein Band (48) aus dreidimensionalem Gewebe (43), dieses Band weist zwei seitliche Seiten (4), zwei Hauptseiten (5) und zumindest zwei diskontinuierliche Teile (49) auf;

b) jeder Diskontinuitätteil besteht zumindest aus zwei Gewebeschichten (7a, 7b), die zueinander gewandten Seiten dieser Schichten, genannt "Diskontinuitätsseiten" (70a, 70b) erstrecken sich von einer seitlichen Seite zur anderen;

c) man schneidet das Band in den beiden Diskontinuitätsteilen (49) so, daß man eine Lage (51A) mit zwei Enden (52-1, 52-2) erhält;

d) in jedem Diskontinuitätsteil (49) wird der Schnitt über die gesamte Dicke und die gesamte Breite jeder Gewebeschichte geführt, so daß man eines der Enden der Lage erhält, dieses Ende Umfaßt eine "Stoßoberfläche" (53), die gleichzeitig aus der Schnittoberfläche (Sa, Sb) jeder Schichte und aus einer "Diskontinuitätsoberfläche" besteht, diese Diskontinuitätsoberfläche ist aus einem Teil oder der Gesamheit zumindest einer Diskontinuitätseite gebildet, diese Stoßoberfläche verbindet sodann die beiden Hauptseiten und die beiden seitlichen Seiten der Lage;

e) man verbindet die beiden Enden der Lage, indem man die Stoßoberfläche des einen Endes mit der Stoßoberfläche des anderen Endes über ihre gesamte Fläche in Kontakt bringt, die Stoßoberfläche des einen Endes hat dann praktisch die gleiche Form und die gleiche Fläche, wie die Stoßoberfläche des anderen Endes;

dieses Verfahren wird durch die folgenden Punkte gekennzeichnet:

f) das Gewebe (43) weist einen dreidimensionalen Körper (44) und Verstärkungsfäden (45, 46) auf, die im Körper angeordnet und von ihm gehalten werden, wobei praktisch alle Leerräume des Gewebes in der Lage sind, von zumindest einem Material imprägniert zu werden, das bei der Herstellung des Luftreifens verwendet wird;

g) in den beiden Diskontinuitätsteilen (49) wird der Schnitt zwischen den Verstärkungsfäden (45, 46) geführt;

h) in jedem Diskontinuitätsteil wird der Schnitt entlang gekreuzter Ebenen (Pa, Pb) geführt, jede Ebene durchquert eine Schichte, das Band hat dabei eine im allgemeinen ebene Form;

i) der Körper weist Schußfäden (33) und Kettfäden (32) auf, die Schußfäden sind zwischen den Kettfäden in praktisch mehreren Ebenen, genannt Schußebenen ($P_{33}$), parallel in der Dicke des Bandes vorgesehen;

j) die Verstärkungsfäden (45, 46) sind praktisch in zumindest zwei Ebenen ($P_{45}$, $P_{46}$) in der Dicke des Bandes vorgesehen, jede Schichte der Diskontinuitasteile weist zumindest eine Ebene der Verstärkungsfäden auf, die Verstärkungsfäden haben in jeder Ebene die gleiche Orientierung, jede Ebene der Verstarkungsfäden liegt parallel zu den Ebenen der Schußfäden oder fällt mit einer dieser Ebenen zusammen.

2. Verfahren nach Anspruch 1, dadurch gekennzeichnet, daß die Diskontinuitätsseitten (70a, 70b) während der Herstellung des Gewebes (43) erhalten werden, diese Seiten sind eben und parallel zu den Hauptseiten des Bandes, das Band ist dabei in einer im allgemeinen ebenen Form angeordnet, mit ebenen und parallelen Hauptseiten.

3. Verfahren nach einem der Ansprüche 1 oder 2, dadurch gekennzeichnet, daß in jedem Diskontinuitätsteil (49) der Schnitt entlang von Ebenen (Pa, Pb) durchgeführt wird, die rechtwinkelig auf die Hauptseiten (5) des Bandes (48) verlaufen, wobei dieses Band so angeordnet ist, daß es im wesentlichen eine ebene Form aufweist, bei der die beiden Hauptseiten eben und parallel sind.

4. Verfahren nach einem der Ansprüche 1 bis 3, dadurch gekennzeichnet, daß das Gewebe (43) Kettfäden (32) aufweist, die praktisch in einer Ebene ($P_{32}$) wellen, die rechtwinkelig auf die Hauptseiten des Gewebes verlaufen, wenn das Band so angeordnet ist, daß es eine im wesentlichen ebene Form aufweist, mit den beiden Hauptseiten eben und parallel, die Wellung der Kettfäden erfolgt nur in einem Teil der Dicke des Bandes in den Diskontinuitätsteilen, die Kettfäden tangieren dabei, die Diskontinuitätsseiten, die Wellung der Kettfäden erfolgt über die gesamte Dicke des Bandes außerhalb der Diskontinuitätsteile, jeder Kettfaden tangiert abwechselnd eine der Hauptseiten und sodann die andere Hauptseiten außerhalb der Diskontinuitätsteile.

5. Verfahren nach einem der Ansprüche 1 bis 4, dadurch gekennzeichnet, daß man das Gewebe (43) mit einem Material imprägniert.

6. Verfahren nach Anspruch 5, dadurch gekennzeichnet, daß die Imprägnierung für das Band (48) vor dem Schneiden in den Diskontinuitätsteilen ausgeführt wird, wobei ein nicht imprägnierbares und nicht klebendes Blatt (10) sich zwischen den Diskontinuitätsseiten während dieser Imprägnierung befindet.

7. Verfahren nach einem der Ansprüche 1 bis 6, dadurch gekennzeichnet, daß die Fläche der Diskontinuitätsoberfläche jedes Endes der Lage zwischen 0,5 und 15% der Fläche einer Hauptseite (5) oder jeder der Hauptseiten (5) der Lage beträgt.

8. Verfahren nach einem der Ansprüche 1 bis 7, dadurch gekennzeichnet, daß die Schußebenen ($P_{33}$) parallel zu den Hauptseiten des Bandes verlaufen, wenn das Band so angeordnet ist, daß es eine im wesentlichen ebene Form aufweist, wobei die beiden Hauptseiten eben und parallel sind.

9. Verfahren nach Anspruch 8, dadurch gekennzeichnet, daß die Schußfäden (33) in zumindest vier Ebenen ($P_{33}$) über die Dicke des Bandes verteilt sind.

10. Verstärkungslagenherstellungsverfahren nach einem der Ansprüche 1 bis 9, dadurch gekennzeichnet, daß die Kettfäden (32) des Körpers (44) jeweils praktisch in einer Ebene wellen, die "Kettebene" ($P_{32}$) genannt wird und die rechtwinkelig auf die Hauptseiten (5) des Bandes steht, die Schußfäden (33) des Körpers (44) sind praktisch parallel zu den Hauptseiten (5) des Bandes (48) und schließen mit den Kettebenen ($P_{32}$) einen Winkel ungleich 90° ein, die Verstärkungsfäden (45, 46) zumindest einer Ebene sind parallel zu den Kettebenen und die Verstärkungsfäden zumindest einer Ebene sind parallel zu den Schußfäden, der Schnitt, der in jedem Diskontinuitätsteil geführt wird, wird entlang von Ebenen geführt, die parallel zu den Verstärkungsfäden verlaufen, die an der Stelle angeordnet sind, an der der Schnitt geführt wird.

11. Verstärkungslagenherstellungsverfahren nach Anspruch 10, dadurch gekennzeichnet, daß das Band (48) durch Schneiden eines Bandes (42) aus Gewebe nach Ebenen erhalten wird, die untereinander parallel verlaufen und mit den Kettebenen dieses Gewebes einen spitzen Winkel δ gleich γ/2 einschließen, wobei γ der Winkel ist, den die Schußfäden (33) dieses Gewebes mit den Kettebenen ($P_{32}$) diese Gewebes einschließen.

12. Verstärkungslagenherstellungsverfahren nach einem der Ansprüche 1 bis 11, dadurch gekennzeichnet, daß die Verstärkungsfäden (45, 46) voneinander durch Fäden des Körpers so getrennt sind, daß die Verstärkungsfäden keinerlei Kontakt untereinander aufweisen.

13. Verstärkungslagenherstellungsverfahren nach einem der Ansprüche 1 bis 12, dadurch gekennzeichnet, daß die Verstärkungsfäden (45, 46) Kettfäden (32) und/oder Schußfäden (33) des Körpers ersetzen.

14. Verstärkungslagenherstellungsverfahren nach einem der Ansprüche 1 bis 13, dadurch gekennzeichnet, daß bei der Herstellung der Verstärkungsfäden (45, 46) zumindest ein zu dem (den) bei den Körperfäden verwendeten Material(ien) unterschiedliches Material verwendet wird.

15. Verstärkungslagenherstellungsverfahren nach einem der Ansprüche 1 bis 14, dadurch gekennzeichnet, daß die Fäden (32, 33), die den Körper (44) bilden, jeweils einen Querschnitt aufweisen, dessen Oberfläche kleiner ist als die Oberfläche des Querschnittes jedes Verstärkungsfadens.

16. Verstärkungslagenherstellungsverfahren nach Anspruch 15, dadurch gekennzeichnet, daß die Fäden (32, 33), die den Körper (44) bilden, jeweils einen Querschnitt haben, dessen Oberfläche höchstens gleich ist einem Viertel der Oberfläche des Querschnittes jedes der Verstärkungsfäden.

17. Verstärkungslagenherstellungsverfahren nach einem der Ansprüche 1 bis 16, dadurch gekennzeichnet, daß die Durchlässigkeit des Gewebes (43) zumindest gleich ist $10^{-11} m^2 \cdot Pa^{-1} \cdot s^{-1}$ für ein Fluid, das laminar strömt und dessen Viskosität gleich ist 1 Pas und dessen Dichte gleich ist 1000 kg/m³.

18. Verstärkungslagenherstellungsverfahren nach einem der Ansprüche 1 bis 17, dadurch gekennzeichnet, daß die Porosität des Gewebes (43) zumindest gleich ist 50%.

19. Verstärkungslagenherstellungsverfahren nach einem der Ansprüche 1 bis 18, dadurch gekennzeichnet, daß das Verhältnis zwischen einerseits der Steifigkeit des Gewebes (43), gemessen nach jeder Richtung der Verstärkungsfäden (45, 46) und andererseits die Steifigkeit des Körpers (44) allein, gemessen in der jeweils gleichen Richtung, zumindest gleich 10 ist, wobei diese Steifigkeitsmessungen für eine Relativverlängerung von 2% durchgeführt werden und das Gewebe (43) für diese Messung von allen Verstärkungsfäden (45, 46) befreit ist, mit Ausnahme derer, in deren Richtung die Steifigkeit gemessen wird.

20. Verstärkungslagenherstellungsverfahren nach einem der Ansprüche 1 bis 19, dadurch gekennzeichnet, daß die Verstärkungsfäden (45, 46) leicht gewellt sind, wobei der Wellungsgrad dieser Fäden kleiner als 10% ist.

**Claims**

1. A process for producing a reinforcement ply (41) for use in the crown of a tyre (40), this process comprising the following features:

(a) a strip (48) of three-dimensional fabric (43) is used, this strip having two side faces (4), two main faces (5), and at least two discontinuous portions (49);

(b) each discontinuous portion is formed of at least two layers of fabric (7a, 7b), the faces facing these layers, known as "discontinuity faces" (70a, 70b), extending from one side face to the other;

(c) the strip is cut at these two discontinuous portions (49) in such a manner as to obtain a ply (51A) havinwo ends (52-1, 52-2);

(d) in each discontinuous portion (49) the cut is effected through the entire thickness and over the entire width of each layer of fabric so as to obtain one of the ends of the ply, this end having an "abutment surface" (53) formed both by the cut surface (5a, 5b) of each layer and by a "discontinuity surface' this discontinuity surface being formed by part or all of at least one discontinuity face, said abutment surface thus joining the two main faces and the two side faces of the ply;

(e) the two ends of the ply are joined end to end by placing the abutment surface of one end into contact with the abutment surface of the other end over their entire areas, the abutment surface of one end then having substantially the same shape and the same area as the abutment surface of the other end;

this process being characterised by the following features:

(f) the fabric (43) has a three-dimensional body (44) and reinforcement cords (45, 46) arranged within said body and held in place by said body, substantially all the voids in the fabric being capable of being impregnated with at least one material which forms part of the constitution of the tyre;

(g) at these two discontinuous portions (49), the cut is effected between the reinforcement cords (45, 46);

(h) in each discontinuous portion the cut is effected along crossed planes ($P_a$, $P_b$), each plane passing through a layer, the strip being arranged in such a manner as to have a generally flat shape;

(i) the body comprises weft threads (33) and warp threads (32), the weft threads being arranged between the warp threads substantially in several parallel planes, called weft planes ($P_{33}$), within the thickness of the strip;

(j) the reinforcement cords (45, 46) are substantially arranged in at least two planes ($P_{45}$, $P_{46}$) within the thickness of the strip, each layer of the discontinuous portions having at least one plane of reinforcement cords, the reinforcement cords having the same orientation in each plane, each plane of the reinforcement cords being parallel to the planes of the weft threads, or joined with one of these planes.

2. A process according to Claim 1, characterised in that the discontinuity faces (70a, 70b) are obtained upon the production of the fabric (43), these faces being flat and parallel to the main faces of the strip, the strip being arranged in such a manner as to have a generally flat shape with flat and parallel main faces.

3. A process according to any one of Claims 1 or 2, characterised in that in each discontinuous portion (49) the cut is effected along planes ($P_a$, $P_b$) perpendicular to the main faces (5) of the strip (48), said strip being arranged in such a manner as to have a generally flat shape with two flat and parallel main faces.

4. A process according to any one of Claims 1 to 3, characterised in that the fabric (43) comprises warp threads (32), undulating substantially in a plane ($P_{32}$) perpendicular to the main faces of the fabric when the strip is arranged in such a manner as to have a generally flat shape with two flat and parallel main faces, the undulation of the warp threads taking place in only a part of the thickness of the strip in the discontinuous portions, the warp threads being tangent to the discontinuity faces, the undulation of the warp threads taking place over the entire thickness of the strip outside the discontinuous portions, each warp thread thus being alternately tangent to one of the main faces and then the other outside the discontinuous portions.

5. A process according to any one of Claims 1 to 4, characterised in that the fabric (43) is impregnated with a material.

6. A process according to Claim 5, characterised in that said impregnation is effected on the strip (48) before effecting the cutting in the discontinuous portions, a non-impregnable and non-sticking sheet (10) being arranged between the discontinuity faces upon said impregnation.

7. A process according to any one of Claims 1 to 6, characterised in that the area of the discontinuity surface of each end of the ply is from 0.5% to 15% of the area of a main face (5) or of each main face (5) of the ply.

8. A process according to any one of Claims 1 to 7, characterised in that the weft planes ($P_{33}$) are parallel to the main faces of the strip when the strip is arranged in such a manner as to have a generally flat shape with two flat and parallel main faces.

9. A process according to Claim 8, characterised in that the weft threads (33) are arranged on at least four planes ($P_{33}$) within the thickness of the strip.

10. A process for producing a reinforcement ply (41) according to any one of Claims 1 to 9, characterised in that each of the warp threads (32) of the body (44) undulates substantially in a plane, known as "warp plane" ($P_{32}$), perpendicu-

lar to the main faces (5) of the strip, the weft threads (33) of the body (44) are substantially parallel to the main faces (5) of the strip (48) and form an angle other than 90° with the warp planes $(P_{32})$, the reinforcement cords (45, 46) of at least one plane being parallel to the warp planes, and the reinforcement cords of at least one plane being parallel to the weft threads, the cut, in each discontinuous portion, being effected along planes parallel to the reinforcement cords located at the place where said cut is effected.

11. A process for producing a reinforcement ply according to Claim 10, characterised in that the strip (48) is obtained by cutting a brand (42) of fabric along planes parallel to each other forming with the warp planes of said fabric an acute angle δ equal to γ/2, γ being the angle which the weft threads (33) of this fabric make with the warp planes $(P_{32})$ of this fabric.

12. A process for producing a reinforcement ply (41) according to any one of Claims 1 to 11, characterised in that the reinforcement cords (45, 46) are separated from each other by threads of the body in such a manner that the reinforcement cords are without contact with each other.

13. A process for producing a reinforcement ply (41) according to any one of Claims 1 to 12, characterised in that the reinforcement cords (45, 46) replace warp threads (32) and/or weft threads (33) of the body.

14. A process for producing a reinforcement ply (41) according to any one of Claims 1 to 13, characterised in that the reinforcement cords (45, 46) are made with at least one material other than the material(s) used to produce the threads of the body.

15. A process for producing a reinforcement ply (41) according to any one of Claims 1 to 14, characterised in that each of the threads (32, 33) constituting the body (44) has a cross section, the surface of which has an area smaller than that of the surface of the cross section of each of the reinforcement cords.

16. A process for producing a reinforcement ply (41) according to Claim 15, characterised in that each of the threads (32, 33) constituting the body (44) has a cross section, the surface of which has an area at most equal to one-quarter of the area of the surface of the cross section of each of the reinforcement cords.

17. A process for producing a reinforcement ply (41) according to any one of Claims 1 to 16, characterised in that the permeability of the fabric (43) is at least equal to $10^{-11} \mathrm{m}^2 \cdot \mathrm{Pa}^{-1} \cdot \mathrm{s}^{-1}$ for a fluid in laminar flow the viscosity of which is 1 Pa · s and the volume mass of which is 1000 kg/m³.

18. A process for producing a reinforcement ply (41) according to any one of Claims 1 to 17, characterised in that the porosity of the fabric (43) is at least equal to 50%.

19. A process for producing a reinforcement ply (41) according to any one of Claims 1 to 18, characterised in that the ratio between on the one hand, the rigidity of the fabric (43) measured along each orientation of the reinforcement cords (45, 46) and, on the other hand, the rigidity of the body (44) alone measured along said orientation is at least equal to 10, these rigidity measurements being carried out for a relative elongation of 2%, the fabric (43) being, for this measurement, without reinforcement cords (45, 46) of an orientation other than that along which the rigidity is measured.

20. A process for producing a reinforcement ply (41) according to any one of Claims 1 to 19, characterised in that the reinforcement cords (45, 46) undulate slightly, the rate of undulation of these cords being less than 10%.

Fig. 1

Fig. 2

Fig. 3

Fig. 4

Fig. 5

Fig. 6

2

Fig. 7

Fig. 8

Fig. 9

Fig. 10

Fig. 11

Fig. 12

Fig. 13

Fig. 14